# EUROPEAN PATENT APPLICATION

(11) **EP 4 580 307 A1**
(43) Date of publication of application: **02.07.2025**
(21) Application number: 23867208.3
(22) Date of filing: 23.08.2023
(51) Int. Cl.: H04W 80/06

(54) **CORE NETWORK DATA TRANSMISSION METHOD, ELECTRONIC DEVICE, AND COMPUTER-READABLE STORAGE MEDIUM**

(30) Priority: 21.09.2022 CN 202211156135
(71) Applicant: ZTE CORPORATION, Shenzhen, Guangdong 518057 (CN)
(72) Inventor: WEI, Xiaopeng, Shenzhen, Guangdong 518057 (CN)
(74) Representative: Chimini, Francesco
(86) International application number: PCT/CN2023/114385
(87) International publication number: WO 2024/060915

(57) **Abstract**

The present application discloses a core network data transmission method, an electronic device, and a computer-readable storage medium, wherein the core network data transmission method includes: storing (S10) a data packet into a preset data flow table after receiving the data packet; acquiring (S20) a window field value of a data receiving end, determining a first response message according to a target window mode corresponding to the window field value, and feeding the first response message back to a data sender; and sending (S30) all data packets in the data flow table to the data receiving end.

## Description

### Cross-Reference to Related Application

The present application claims the priority of the Chinese patent application filed on September 21, 2022 with an application number of 202211156135.8, the contents of which are incorporated herein by reference in its entirety.

### Technical Field

The present application relates to the technical field of power electronics, in particular to a core network data transmission method, an electronic device and a computer-readable storage medium.

### Background

At present, most of the traffic in the network is still based on TCP (Transmission Control Protocol), including HTTP (Hyper Text Transfer Protocol) and HTTPS (Hypertext Transfer Protocol Secure) for accessing web pages, network download files, and video websites. As to the current core network devices, transparent transmission is directly performed after an outer layer of a data packet is encapsulated, and the data packet is not subjected to optimized transmission processing. Although a technology in which the TCP is accelerated based on a congestion control algorithm has been proposed, however, a back-end server website needs to be set and configured at a kernel level, thereby leading to inconvenient use and failure in dual-end transparent TCP acceleration of the data sender and the data receiver.

### Summary

A main object of the present application is to provide a core network data transmission method, an electronic device, and a computer-readable storage medium, aiming at solving a technical problem of how to realize dual-end transparent TCP acceleration of a data sender and a data receiver.

To achieve the above object, the present application provides a core network data transmission method, including:
storing a data packet into a preset data flow table after receiving the data packet;
acquiring a window field value of a data receiving end, determining a first response message according to a target window mode corresponding to the window field value, and feeding the first response message back to a data sender; and
sending all data packets in the data flow table to the data receiving end.

Further, to achieve the above object, the present application further provides an electronic device, including: a processor; and a memory configured to store computer executable instructions, wherein when executed, the executable instructions enable the processor to perform the steps of the above core network data transmission method.

Further, to achieve the above object, the present application further provides a computer-readable storage medium, wherein the computer-readable storage medium stores one or more programs, when executed by an electronic device including a plurality of applications, the one or more programs enable the electronic device to perform the steps of the above core network data transmission method.

### Brief Description of the Drawings

FIG. 1 is a flow diagram of a first embodiment in the core network data transmission method of the present application;
FIG. 2 is a schematic diagram of the processing of a TCPO acceleration module in the core network data transmission method of the present application;
FIG. 3 is a schematic diagram of an overall flow in the core network data transmission method of the present application;
FIG. 4 is a schematic diagram showing interaction among three parties including a data sender, a TCPO acceleration module and a data receiving end in the core network data transmission method of the present application;
FIG. 5 is a schematic diagram showing judgment of a window mode in the core network data transmission method of the present application;
FIG. 6 is a flow diagram of storing data packets in the core network data transmission method of the present application;
FIG. 7 is a schematic diagram showing generation of an ACK window in the core network data transmission method of the present application;
FIG. 8 is a flow diagram of running of a memory in the core network data transmission method of the present application.

The realization of the object, functional characteristics and advantages of the present application will be further described in combination with the embodiments and with reference to the accompanying drawings.

### Detailed Description of the Embodiments

It should be understood that the specific embodiments described herein are merely for the purpose of explaining the present application and are not intended to limit the present application.

The technical solutions in the embodiments of the present application will be described clearly and completely below in combination with the accompanying drawings in the embodiments of the present application, and apparently, the described embodiments are merely a part but not all of the embodiments of the present application. Based on the embodiments of the present application, all the other embodiments obtained by those skilled in the art without any creative effort shall all fall within the protection scope of the present application.

It should be noted that all the directional indications (such as upper, lower, left, right, forward, backward ...) in the embodiments of the present application are merely used to explain a relative positional relationship, movement and the like between components in a particular attitude (as shown in the accompanying drawings), and that if that particular attitude is changed, then the directional indications are changed accordingly.

In the present application, unless otherwise expressly specified and limited, the terms "connection", "fixing" and the like should be understood in a broad sense, e.g., the "connection" may be a fixed connection, a detachable connection, or an integral connection; it may be a mechanical connection or an electrical connection; it may be a direct connection or an indirect connection through an intermediate medium; it may also be a connection between two elements or an interaction between two elements, unless otherwise expressly specified. For those skilled in the art, the specific meanings of the above terms in the present application may be understood according to specific conditions.

In addition, descriptions involving "first", "second" and the like in the present application are merely used for descriptive purposes and are not to be construed as indicating or implying their relative importance or implicitly specifying the number of technical features indicated. Therefore, a feature defined as "first" or "second" may explicitly or implicitly include at least one such feature. In addition, the technical solutions of various embodiments may be combined with each other, but should be on the basis that the technical solutions are achievable by those skilled in the art, and when the combination of technical solutions is contradictory or unachievable, it should be considered that the combination of such technical solutions does not exist and does not fall within the protection scope claimed in the present application.

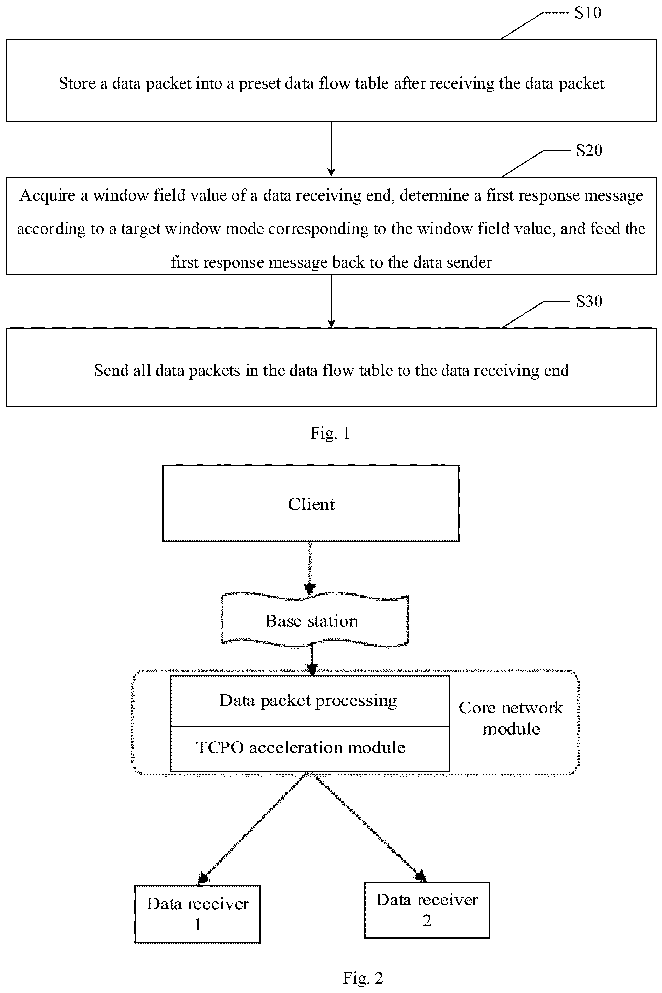

The present application provides a core network data transmission method, and in a first embodiment of the core network data transmission method of the present application, referring to FIG. 1, the core network data transmission method includes:
step S10, storing a data packet into a preset data flow table after receiving the data packet;
the core network undertakes a function of transmitting data packets between mobile phone internet users and the public network. Due to characteristics of the network, latency and packet loss of user data packets on a wireless side of the mobile phone frequently happen. A large latency and a slow response to data reception on the server may lead to a low speed of data transmission of a server; if data packet loss is serious, the data packet needs to be retransmitted through the public network, thereby aggravating the burden of the public network and the core network.

In some embodiments, a TCP (Transmission Control Protocol) acceleration function is available, however, TCP acceleration is performed at a single end or dual ends of the data sender or the data receiver, rather than at an intermediate network element of the core network, therefore, dual-end transparent TCP acceleration of the data sender and the data receiver cannot be performed at the intermediate network element of the core network.

In the present embodiment, a TCPO (TCP Optimize) acceleration module needs to be added in the core network element, to play a role of an intermediate agent. Therefore, in the core network element, after the TCPO acceleration module receives a data packet sent by a public network server, a flow can be constructed according to the five-tuple of the data packet, to obtain a well-created data flow table, the data packet is cached into the data flow table, and then is sent to a data receiving end on a user side, and the method of constructing the ACK (Acknowledge character) is adopted to give response to the data sender, and since there is no need to wait for a response from the data receiving end, the ACK is quickly returned to the data sender, the data sender has greater difficulty in quickly sending the remaining data to be sent to the TCPO acceleration module, and then the remaining data are sent to the data receiving end through the TCPO acceleration module. Wherein, the data sender may be an intelligent terminal, a server, and the like. The data receiving end may be an intelligent terminal, a server, and the like. Wherein, the TCPO acceleration module is located in the core network, and is connected to the mobile phone Internet users and servers in the public network, and the TCPO establishes a unique data flow for each request according to the user's request for Internet access, caches data from the public network into the data flow established by the TCPO first, and at the same time sends the cached data packet to the user.

As shown in FIG. 2, if the data sender is a client, then two data receivers are available, which are respectively a data receiver 1 and a data receiver 2. Therefore, after the client sends a data packet to the core network module through a base station, the TCPO acceleration module in the core network module will perform packet processing on the data packet, and then send to the data receiver 1 and the data receiver 2, respectively.

Step S20, acquiring a window field value of a data receiving end, determining a first response message according to a target window mode corresponding to the window field value, and feeding the first response message back to the data sender;
in the TCPO acceleration module, after the data packet has been acquired and cached, an ACK is also constructed to respond to the data sender, while the size of the window for constructing the ACK is directly proportional to the size of the amount of data sent by the subsequent data sender, and a TCP protocol stack of the data sender is notified of the size of the received cache of the data receiving end through the constructed ACK by the window field value of the data receiving end.

Therefore, in the present embodiment, in order to speed up data transmission in a slow start phase of TCP, whether the window corresponding to the window field value is in a large window mode or in a small window mode can be determined first according to a TCP link initialization phase. Moreover, when the window is in the small window mode, a fixed sliding window is adopted to speed up data transmission in the slow start phase of TCP. When the window is in the large window mode, both the data receiving capacity of the data receiver and the cache capacity of the TCPO acceleration module should be considered at the same time, therefore, the maximum capacity of the data receiver for receiving data at the current moment can be calculated according to the size of the window of the data receiver, the in-transit message, and the cache capacity of the TCPO acceleration module, and is taken as a first response message, a sliding window is constructed according to the first response message, then the ACK is generated according to the sliding window and is sent to the data sender, and the data sender determines the amount of data to be subsequently sent according to the sliding window in the received ACK and sends the data in the form of a data packet to the TCPO acceleration module according to the sliding window, and then the TCPO acceleration module caches the received data packets into a positive order queue or an out-of-order queue in the data flow table according to their sequences.

Step S30, sending all data packets in the data flow table to the data receiving end.

In the TCPO acceleration module, all the data packets in the data flow table will be sent to the data receiving end in sequence, and after a response from the data receiving end is received, the data packets that have been sent from a cache queue in the data flow table (e.g., a positive order queue or an out-of-order queue) will be deleted. If data packet loss or failure in response after a time limit occurs to the user Internet terminal (i.e., the data receiving end), then the TCPO acceleration module only needs to retransmit the data packets already existing in the local cache, and this part of data does not need to be retransmitted in the public network. Wherein, the TCPO acceleration module processes the data packets responded by the user Internet terminal with fast retransmission data judgment and SACK (Selective ACKnowledgment) processing method, such that the data packets can be sent to the user Internet terminal within minimum retransmission time and with fewer retransmission data packets.

To assist in understanding the principles of the TCPO acceleration module in the present embodiment, examples are given below for illustration.

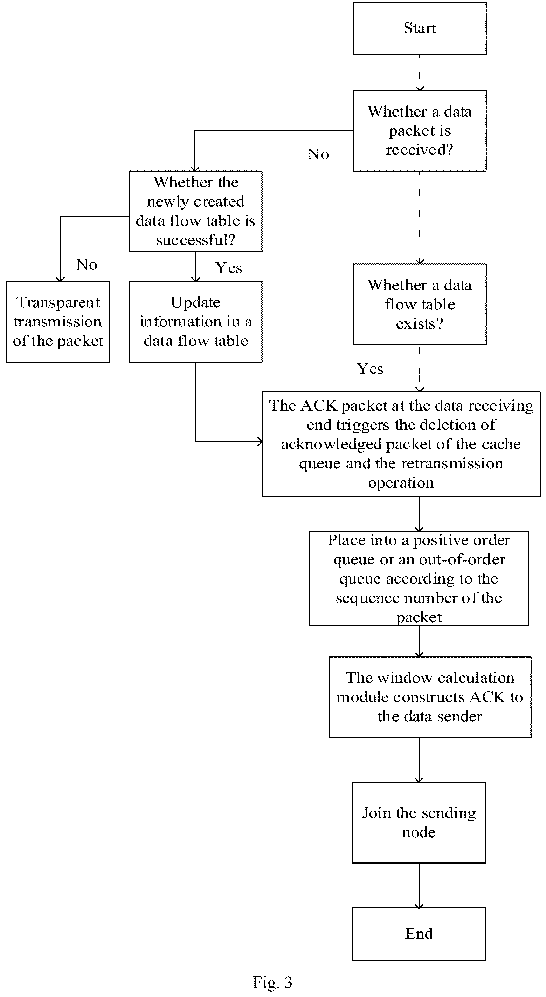

As shown in FIG. 3, when a request for connection establishment is received from a user, a data flow table is determined according to the five-tuple of the data packet (user IP, user port number, website IP, website port number, and TCP attributes), to store the data needed for subsequent connections. That is, after a data packet is received, whether a data flow table exists is queried according to the five-tuple of the data packet. If not, and if the current data packet is a SYN (Synchronize Sequence Numbers) packet, then a new data flow table is created and whether the newly created data flow table is successful is detected. If the newly created data flow table is successful, then the information in the data flow table is initialized, and the maximum number of data messages allowed to be cached in the positive order queue and the out-of-order queue in the data flow table is allocated to update the information in the data flow table. However, if the newly created data flow table is not successful, then the data packet is transparently transmitted, i.e., the data packet sent by the data sender is directly transmitted to the data receiving end.

When the data flow table corresponding to the data packet exists in the TCPO acceleration module, or after the data flow table corresponding to the data packet has been successfully created, the ACK packet at the data receiving end triggers the deletion of acknowledged packet of the cache queue and the retransmission operation, and is placed into the positive order queue or the out-of-order queue according to the sequence number of the packet, and a window calculation module constructs the ACK to the data sender, and the data sender joins the sending node for subsequent sending of data packets, until the processing is finished.

Specifically, the window mode of the current data receiver needs to be judged, and if the advised window value is less than the configured window threshold value, then the window is determined to be in a small window mode. Since the initialized value of the window value of the data receiver is smaller, and in order to accelerate the speed of the start phase of data sending, in the small window mode, the response window is not subjected to a window descending operation. Otherwise, the window mode is determined to be in a large window mode, when the window is in the large window mode, the response window needs to be subjected to window descending processing, that is, the number of bytes of the in-transit message that has been sent is subtracted from the data receiver window. In addition, for the response from the data receiver, the data packets that have been acknowledged in the cache queue need to be deleted, and the size of the advised window of the data receiver is also recorded for subsequent construction of an ACK. After the ACK is sent to the data sender and the data packets subsequently sent by the data sender are received, the data packets are stored in the cache queue in the data flow table, and during storing, whether the data packet is a positive order packet or an out-of-order packet is judged according to the sequence number of the received data packet, if the data packet is a positive order packet, then the data packet is stored into a positive order queue, if the data packet is an out-of-order packet, then the data packet is stored into an out-of-order queue. The TCPO acceleration module determines the actual size of the descending window according to the size of the advised window of the data receiving end. Moreover, in order to prevent the TCPO acceleration module from caching data packets beyond the maximum capacity of caching data packets, the window size in the ACK packet responded to the data sender takes a smaller value of the size of the descending window and the maximum capacity of caching data packets. When a data packet is sent to the data receiving end, the current sending time will be recorded. In addition, a SACK option is added in the negotiation phase with the client, such that once packet loss occurs at the data receiving end, the lost data packet can be calculated from the SACK value advertised by the client, and then the lost data packet is retransmitted to the data receiving end, and after the response message fed back by the data receiving end is received, whether packet loss occurs is determined according to the ACK response sequence number in the response message, and if packet loss occurs, then retransmission is performed immediately. However, if no ACK response sequence number exists in the response message, whether a time limit is exceeded is determined according to the recorded sending time, and if a time limit is exceeded, then the timeout data packet is retransmitted to the data receiving end.

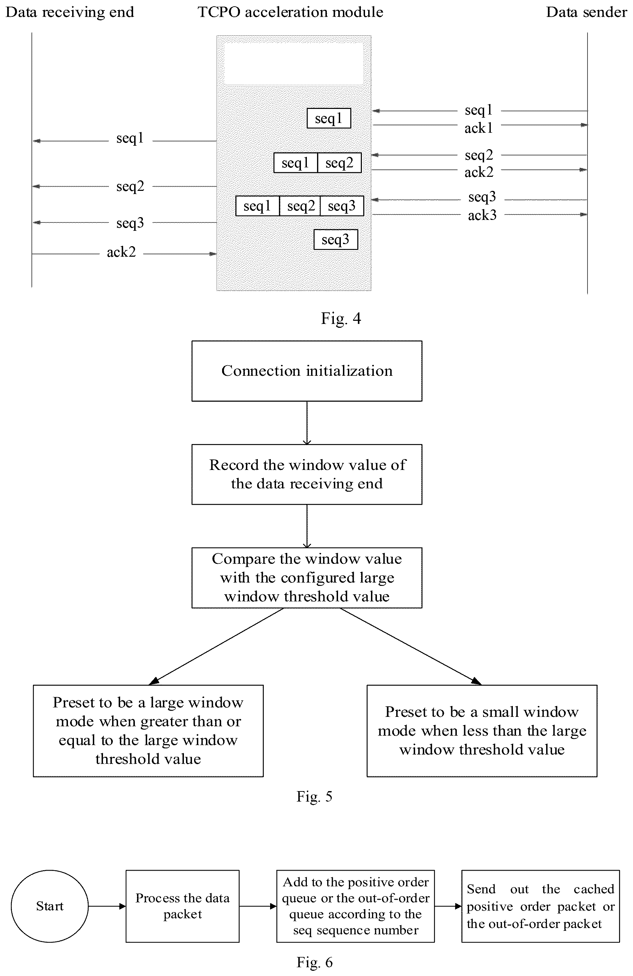

As shown in FIG. 4, a data sender, a TCPO acceleration module, and a data receiving end are included. Every time the data sender sends a data packet to the TCPO acceleration module, the TCPO acceleration module will respond with an ACK response packet to the data sender. For example, if the data sender sends seq1 to the TCPO acceleration module, then the TCPO acceleration module responds ack1 to the data sender; if the data sender then sends seq2 to the TCPO acceleration module, then the TCPO acceleration module responds ack2 to the data sender; and if the data sender sends seq3 to the TCPO acceleration module, then the TCPO acceleration module responds ack3 to the data sender. After receiving the data packet from the data sender, the TCPO acceleration module caches the data packet into the positive order queue or the out-of-order queue in the data flow table, sends the data packet to the data receiver, and then receives the response message fed back by the data receiver, and then updates the data flow table. For example, the TCPO acceleration module sends seq1 to the data receiver, sends seq2 to the data receiver, and sends seq3 to the data receiver. Moreover, after receiving the data packet, the data receiving end will feed back corresponding response message to the TCPO acceleration module, such as feeding back the ack2 data packet. Wherein, when sending the ACK response packet to the data sender, the TCPO acceleration module will calculate the field value of the descending window according to the window field value of the data receiving end, and selects a smaller value of the field value of the descending window and the remaining cache space value in the TCPO acceleration module to write into the ACK response packet, and then sends to the data sender, such that the data sender selects an appropriate data packet to send to the TCPO acceleration module according to the ACK response packet.

In the present embodiment, after a data packet is received in the core network, the data packet will not be sent to the data receiver immediately, but is stored into a data flow table, and the target window mode is determined according to the window field value of the data receiving end, in order to generate a first response message according to the target window mode, and the first response message is fed back to the data sender, the first response message can be quickly returned to the data sender without waiting for a response from the data receiver, such that the data sender can more quickly send the remaining data to be sent to the core network, and then can send the remaining data to the data receiver through the core network, thereby realizing transparent TCP acceleration of the data sender. Moreover, all the data packets in the data flow table will be sent to the data receiving end, such that the data receiving end can acquire the data packets in the data flow table according to its own window, and transparent TCP acceleration of the data receiver can be realized without kernel-level modification.

Based on the above first embodiment of the present application, a second embodiment of the core network data transmission method of the present application is provided. In the present embodiment, step S20 of determining a first response message according to a target window mode corresponding to the window field value of the above embodiment includes:
step a: determining a target window mode corresponding to the window field value, and adjusting the window field value according to the target window mode to obtain a field value of a descending window; and
step b, determining a first response message according to the field value of a descending window.

In the present embodiment, in the TCPO acceleration module, after an initialization connection is established with the data receiving end, the size of the advised window of the data receiving end can be directly acquired, that is, a window field value of the data receiving end can be acquired, and a target window mode of the advised window of the data receiving end can be determined according to the window field value. Wherein, the window field value may be the number of bytes of the advised window of the data receiving end.

Moreover, since the receive buffer will change at any time during data transmission, and when sending acknowledgement data to the other party, the data receiving end will write the size of the current receive buffer (i.e., the maximum receive data value of the data receiving end) into the window field value of the ACK packet sent to the TCPO acceleration module, therefore, the window field value responded by the data receiving end can be directly acquired in the TCPO acceleration module. Then a response window is constructed according to the window field value, and the first response message corresponding to the response window is written into the ACK packet, and after the TCPO acceleration module receives the data packet, the ACK packet having the first response message can be responded to the data sender.

Wherein, when determining the first response message corresponding to the response window, whether the window field value needs to be adjusted should be determined first, such as by performing a window descending adjustment, or directly adjusting the window field value to a fixed value, e.g., the field value of a descending window. When the target window mode is a large window mode, then the window field value is decreased, i.e., the window is subjected to window descending processing, and the field value corresponding to the window after window descending processing is taken as the field value of the descending window. The field value of the descending window is then taken as the maximum received data value of the data receiving end, and this maximum received data value is written into the ACK packet as a first response message, and then is sent to the data sender, such that the data sender sends according to the maximum received data value when sending subsequent data, so as to improve the efficiency of data sending.

In addition, considering that the initialization value of the window value of the data receiver is small, so in order to speed up the beginning phase of data sending, when the target window mode is a small window mode, the response window is not subjected to window descending processing, when the target window mode is a large window mode, the response window is subjected to window descending processing, wherein the method of window descending can be realized through subtracting the number of bytes of the in-transit message that has been sent from the size of the window of the data receiver. At the same time, in order to prevent the TCPO acceleration module from caching data packets beyond the maximum capacity of caching data packets, the window size in the ACK packet finally responded to the data sending end is a smaller value of the size of the descending window and the size of the remaining cache space value of the TCPO acceleration module.

In the present embodiment, the window field value is adjusted according to the target window mode corresponding to the window field value to obtain the field value of the descending window, and then the first response message is determined according to the field value of the descending window, to quickly feed back to the data sender, such that the subsequent data sender can quickly send data without having to wait for a response from the data receiver, thereby improving the efficiency of data sending.

The determining a target window mode corresponding to the window field value, and adjusting the window field value according to the target window mode to obtain a field value of the descending window includes:
step c: after the window field value is less than a preset large window threshold value, determining that the target window mode corresponding to the window field value is a small window mode, and adjusting the window field value to a field value of a descending window according to the preset large window threshold value.

In the present embodiment, after the window field value of the data receiving end is acquired, the window field value needs to be compared with the preset large window threshold value set in advance. Wherein, the preset large window threshold value may be a threshold value set by the user in advance. After the window field value is less than the preset large window threshold value, the target window mode corresponding to the window field value can be directly determined to be a small window mode, i.e., at this time, the advised window of the data receiving end is a small window. At this time, the window field value needs to be adjusted, the window field value is adjusted to be equal to the preset large window threshold value, and the adjusted window field value is taken as the field value of the descending window.

**In** the present embodiment, after the window field value is less than the preset large window threshold value, the target window mode is determined to be a small window mode, at this time, the window field value can be directly adjusted to the field value of descending window according to the preset large window threshold value, thereby guaranteeing accuracy of the acquired field value of the descending window.

The determining a target window mode corresponding to the window field value, and adjusting the window field value according to the target window mode to obtain a field value of the descending window includes:
step d: after the window field value is greater than or equal to a preset large window threshold value, determining that the target window mode corresponding to the window field value is a large window mode; and
step e: calculating a difference between the window field value and the number of bytes of the in-transit message, and adjusting the window field value to a field value of the descending window according to the difference.

**In** the present embodiment, after the window field value is greater than or equal to the preset large window threshold value, the target window mode corresponding to the window field value can be determined to be a large window mode, i.e., the advised window of the data receiving end is a large window at this time. At this time, the target window mode needs to be adjusted, therefore, the number of bytes of the in-transit message that has been sent at present can be determined first, and then the difference between the window field value and the number of bytes of the message is calculated, and the window field value is adjusted to be the same as the difference, and at the same time, the window corresponding to the target window mode is subjected to window descending processing according to the difference, and the adjusted window field value is taken as the field value of the descending window.

For example, as shown in FIG. 5, after initialization of the connection between the data sender and the data receiving end, the window value of the data receiving end will be recorded, and the window value is compared with the configured large window threshold value, and if the window value is greater than or equal to the large window threshold value, then the target window mode is determined to be a large window mode, and if the window value is less than the large window threshold value, then the target window mode is determined to be a small window mode. Wherein, the large window threshold value may be a large window threshold value. The target window modes include a large window mode and a small window mode.

In the present embodiment, after the window field value is greater than or equal to a preset large window threshold value, the target window mode is determined to be a large window mode, and the window field value is adjusted to a field value of a descending window according to a difference between the window field value and the number of bytes of the message, thereby guaranteeing accuracy of the field value of the acquired descending window.

The determining a first response message according to the field value of a descending window includes:
step f, after the field value of a descending window is greater than a remaining cache space value in the core network, taking the remaining cache space value as a first response message; and
step g, after the field value of a descending window is less than the remaining cache space value in the core network, taking the field value of a descending window as a first response message.

In the present embodiment, after acquiring the field value of a descending window, in order to prevent the TCPO acceleration module from caching data packets beyond the maximum capacity of caching data packets, the field value of a descending window will not be directly written into an ACK response packet (i.e., a response packet that the TCPO module responds to the data sender after receiving a data packet), instead, the remaining cache space value of the TCPO acceleration module in the core network is first acquired, namely, the maximum number of data packets that the TCPO acceleration module can cache at the current moment is determined. Then the field value of the descending window is compared with the remaining cache space value, and after the field value of the descending window is greater than the remaining cache space value, the remaining cache space value can be directly written into the ACK response packet as a first response message. After the field value of a descending window is less than or equal to the remaining cache space value, the field value of a descending window is written into the ACK response packet as the first response message.

In the present embodiment, after the field value of a descending window is greater than the remaining cache space value, the remaining cache space value is taken as the first response message, and after the field value of a descending window is less than the remaining cache space value, the field value of the descending window is taken as the first response message, thereby guaranteeing accuracy of the acquired first response message.

Based on the first or second embodiment of the present application described above, a third embodiment of the core network data transmission method of the present application is provided. In the present embodiment, after step S30 of sending all the data packets in the data flow table to the data receiving end in the above embodiment, the method includes:
step h, after receiving a second response message fed back by the data receiving end, determining a response sequence number in the second response message; and
step i, upon determining the existence of an abnormity according to the response sequence number, determining an abnormal data packet corresponding to the abnormity in the data flow table, and sending the abnormal data packet to the data receiving end again.

In the present embodiment, after the TCPO acceleration module sends the data packets in the sequence of the data flow table to the data receiving end, the data receiving end will feed back a response message, i.e., a second response message, and after the second response message fed back by the data receiving end is received, a response sequence number in the second response message needs to be determined, in order to determine whether an abnormity of a data sending error exists according to the response sequence number, such as a packet loss. If an abnormity exists, an abnormal data packet corresponding to the abnormity in the data flow table is determined, and this abnormal data packet is sent to the data receiving end again.

In the present embodiment, when the existence of an abnormity is determined according to the response sequence number in the second response message fed back by the data receiving end, the abnormal data packet corresponding to the abnormity is directly sent to the data receiving end again, so as to guarantee that the data receiving end can sequentially receive the complete data packet.

The storing the data packet into a preset data flow table after receiving the data packet sent by the data sender includes:
step j: after a data packet sent by a data sender is received and an empty set exists, creating a data flow table according to a five-tuple of the data packet, wherein the empty set does not include a data flow table corresponding to the data packet; and
step k: storing the data packet into a target queue in the data flow table according to the sequence number of the data packet, wherein the target queue includes a positive order queue or an out-of-order queue.

In the present embodiment, when the TCPO acceleration module receives a data packet sent by a data sender, whether a data flow table created in advance corresponding to the data packet exists in the TCPO module should be determined according to the data packet. If no data flow table created in advance exists, then a data flow table should be created according to the five-tuple of the data packet. Wherein, the five-tuple includes user IP, user port number, website IP, website port number and TCP attributes.

After the data flow table has been created, the information in the data flow table is initialized, and the maximum number of data messages allowed to be cached in the positive order queue and the out-of-order queue in the data flow table is allocated to update the information in the data flow table. Then the sequence number of the data packet is determined, and if the sequence number of the data packet is a positive sequence number, then the data packet is stored into the positive order queue in the data flow table. If the sequence number of the data packet is an out-of-order number, then the data packet is stored into the out-of-order queue in the data flow table. For example, as shown in FIG. 6, after the TCPO acceleration module receives a data packet, the TCPO acceleration module starts to process the data packet and adds the data packet to the positive order queue or the out-of-order queue according to the seq sequence number, and then sends out the cached positive order packet or out-of-order packet.

In the present embodiment, after a data packet sent by the data sender is received and no data flow table corresponding to the data packet exists, a data flow table is created according to the five-tuple of the data packet, and then the data packet is stored into the data flow table according to the sequence number of the data packet, thereby guaranteeing that the TCPO acceleration module can normally acquire the data packet so as to subsequently send the data packet again to the data receiving end.

After step S20 of feeding the first response message back to the data sender, the method includes:
step x: receiving a new data packet sent again by the data sender based on the first response message, and performing a step of storing the data packet into a preset data flow table after receiving the data packet sent by the data sender according to the new data packet.

In the present embodiment, after the TCPO acceleration module feeds back the ACK response packet having the first response message to the data sender, the data sender will determine the new data packet to be sent again according to the first response message and send the new data packet to the TCPO acceleration module. The TCPO acceleration module will perform the above step S10 cyclically again until the data sender sends all the data packets and the data receiver receives all the data packets.

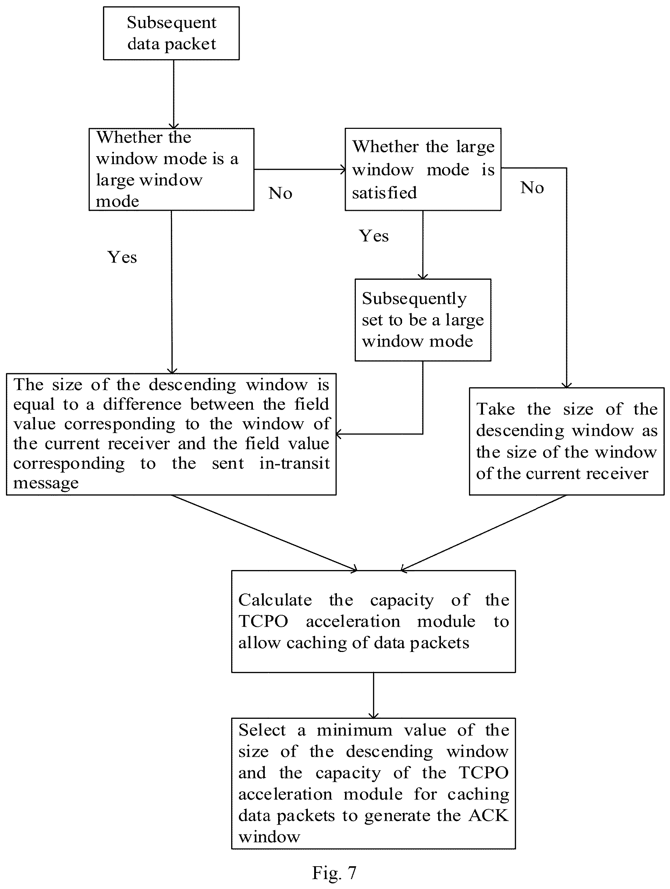

As shown in FIG. 7, if a subsequent data packet sent by the data sender is received, the corresponding ACK response packet will be generated to quickly respond to the data sender. Whether the window mode in the constructed ACK response packet is a large window mode will be continuously judged, if the window mode is a large window mode, the large window corresponding to the large window mode needs to be subjected to window descending processing, to obtain a descending window. Wherein, the size of the descending window is equal to a difference between the field value corresponding to the window of the current receiver and the field value corresponding to the sent in-transit message. If the window mode is not a large window mode, whether the current window satisfies the large window mode is determined, and if the large window mode is satisfied, then the window mode is subsequently set to be a large window mode and window descending processing is performed, to obtain a descending window. If the current window also does not satisfy the large window mode, then the size of the descending window set in advance is acquired, and the size of the descending window is taken as the size of the window of the current receiver. Meanwhile, the capacity of the TCPO acceleration module to allow caching of data packets needs to be calculated, and a minimum value of the size of the descending window and the capacity of the TCPO acceleration module for caching data packets is selected to generate the ACK window, and then the data sender is responded through the ACK window.

In the present embodiment, through a step of receiving a new data packet sent again by the data sender based on the first response message and storing the data packet into a preset data flow table after receiving the data packet sent by the data sender, the data sender can adjust in real time the subsequently sent data packets according to the first response message fed back by the TCPO acceleration module, thereby improving the efficiency of data packet sending.

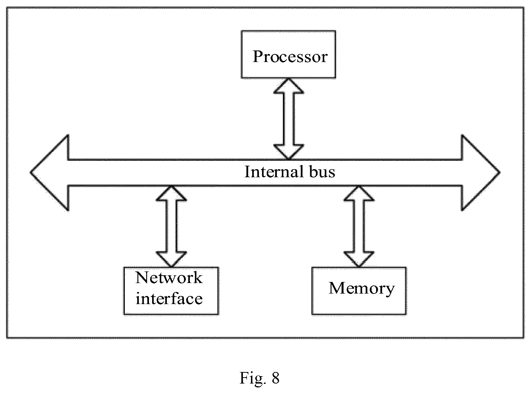

In an embodiment, FIG. 8 is a structural schematic diagram of an electronic device of an embodiment of the present application, as shown in FIG. 8, at a hardware level, the electronic device includes a processor, and optionally also includes an internal bus, a network interface, and a memory. Wherein, the memory may include an internal memory, such as a high-speed random-access memory (RAM), or may also include a non-volatile memory, such as at least 1 disk memory. Of course, the electronic device may also include hardware required for other services. The processor, the network interface, and the memory may be connected to each other via an internal bus, and the internal bus may be an ISA (Industry Standard Architecture) bus, a PCI (Peripheral Component Interconnect) bus, or an EISA (Extended Industry Standard Architecture) bus. The buses can be divided into address buses, data buses, control buses, etc. For ease of representation, only one bi-directional arrow is shown in FIG. 5, but it does not mean that there is only one bus or one type of bus. The memory is configured to store programs. Specifically, the programs may include program codes, and the program codes include computer operating instructions. The processor reads a corresponding computer program from the non-volatile memory into the memory and then runs the program, and forms a shared resource access control device at a logical level. The processor executes the program stored in the memory and is specifically configured to perform the steps of the above core network data transmission method.

In addition, the present application further provides a computer-readable storage medium, the computer-readable storage medium stores one or more programs, and the one or more programs are further executed by one or more processors to perform the steps of each embodiment of the above core network data transmission method.

Specific embodiments of the computer-readable storage media of the present application are substantially the same as the embodiments of the memory access methods described above and will not be repeated redundantly herein.

It should be noted that, as used herein, the terms "including", "comprising" or any other variant thereof are intended to cover non-exclusive inclusion, such that a process, method, article, or system that includes a set of elements not only includes those elements, but also includes other elements that are not explicitly listed, or includes the elements inherent to such process, method, article or system. Without further limitations, the element defined by the statement "includes a ......" does not exclude the existence of another identical element in the process, method, article, or system that includes that element.

The above sequence numbers of the embodiments of the present application are for descriptive purposes only and do not represent the merits of the embodiments.

Through the above description of the embodiments, those skilled in the art can clearly understand that the above embodiment method may be implemented with the aid of software and necessary general-purpose hardware platforms, or of course may be implemented by means of hardware, but in many cases the former is the better implementation. Based on such an understanding, the technical solution of the present application can be embodied in the form of a software product in essence or in part that contributes to the prior art. The computer software product is stored in a storage medium (e.g., a ROM/RAM, a diskette, a CD-ROM) as described above, and includes a number of instructions to enable a terminal device (which may be a mobile phone, a computer, a server, an air conditioner, a network device, etc.) to perform the method in various embodiments of the present application.

The above is merely an optional embodiment of the present application, and is not intended to limit the patent scope of the present application. All the equivalent structures or equivalent process transformations made by using the contents of the specification and the accompanying drawings of the present application, or directly or indirectly applied in other related technical fields, are all similarly included in the protection scope of the patent of the present application.

## Claims

1. A core network data transmission method, comprising:
storing a data packet into a preset data flow table after receiving the data packet;
acquiring a window field value of a data receiving end, determining a first response message according to a target window mode corresponding to the window field value, and feeding the first response message back to a data sender; and
sending all data packets in the data flow table to the data receiving end.

2. The core network data transmission method according to claim 1, wherein the determining a first response message according to a target window mode corresponding to the window field value comprises:
determining the target window mode corresponding to the window field value, and adjusting the window field value according to the target window mode to obtain a descending window field value; and
determining a first response message according to the descending window field value.

3. The core network data transmission method according to claim 2, wherein the determining the target window mode corresponding to the window field value, and adjusting the window field value according to the target window mode to obtain a descending window field value, comprises:
after the window field value is less than a preset large window threshold value, determining the target window mode corresponding to the window field value to be a small window mode, and adjusting the window field value to the descending window field value according to the preset large window threshold value.

4. The core network data transmission method according to claim 2, wherein the determining the target window mode corresponding to the window field value, and adjusting the window field value according to the target window mode to obtain a descending window field value, comprises:
after the window field value is greater than or equal to a preset large window threshold value, determining the target window mode corresponding to the window field value to be a large window mode; and
calculating a difference between the window field value and number of bytes of an in-transit message, and adjusting the window field value to the descending window field value according to the difference.

5. The core network data transmission method according to claim 2, wherein the determining a first response message according to the descending window field value comprises:
after the descending window field value is greater than a remaining cache space value in a core network, using the remaining cache space value as the first response message; and
after the descending window field value is less than the remaining cache space value in the core network, using the descending window field value as the first response message.

6. The core network data transmission method according to claim 1, wherein after sending all data packets in the data flow table to the data receiving end, the method comprises:
after receiving a second response message fed back by the data receiving end, determining a response sequence number in the second response message; and
upon determining existence of an abnormity according to the response sequence number, determining an abnormal data packet corresponding to the abnormity in the data flow table, and sending the abnormal data packet again to the data receiving end.

7. The core network data transmission method according to claim 1, wherein the storing a data packet into a preset data flow table after receiving the data packet, comprises:
after the data packet sent by the data sender is received and an empty set exists, creating the data flow table according to a five-tuple of the data packet, wherein the empty set does not comprise a data flow table corresponding to the data packet; and
storing the data packet into a target queue in the data flow table according to a sequence number of the data packet, wherein the target queue comprises a positive order queue or an out-of-order queue.

8. The core network data transmission method according to any one of claims 1 to 7, wherein after feeding the first response message back to the data sender, the method comprises:
receiving a new data packet sent again by the data sender based on the first response message, and performing, according to the new data packet, the step of the storing a data packet into a preset data flow table after receiving the data packet sent by the data sender.

9. An electronic device, comprising: a processor, and a memory configured to store computer executable instructions, wherein the executable instructions, when executed, cause the processor to perform the steps of the core network data transmission method in any one of claims 1 to 8.

10. A computer-readable storage medium, wherein the computer-readable storage medium stores one or more programs, the one or more programs, when executed by an electronic device comprising a plurality of applications, cause the electronic device to perform the steps of the core network data transmission method in any one of claims 1 to 8.
